# EUROPÄISCHE PATENTSCHRIFT

(11) **EP 1 728 682 B1**
(45) Veröffentlichungstag und Bekanntmachung des Hinweises auf die Patenterteilung: **16.07.2008**
(21) Anmeldenummer: 06011278.6
(22) Anmeldetag: 31.05.2006
(51) Int. Cl.: B60R 1/06

(54) **Aussenspiegel mit Verstelleinrichtung**
External mirror with adjusting device
Rétroviseur extérieur avec un dispositif de réglage

(30) Priorität: 03.06.2005 DE 102005025614
(43) Veröffentlichungstag der Anmeldung: 06.12.2006
(73) Patentinhaber: MEKRA Lang GmbH & Co. KG, 90765 Fürth (DE)
(72) Erfinder: Dr. Lang, Werner, 91465 Ergersheim (DE); Popp, Albrecht, 91629 Weihenzell (DE); Reimchen, Richard, 91522 Ansbach (DE)
(74) Vertreter: Winter, Brandl, Fürniss, Hübner Röss, Kaiser, Polte Partnerschaft Patent- und Rechtsanwaltskanzlei

(56) Entgegenhaltungen:
- EP-A- 1 153 794
- DE-A1- 3 008 031
- US-A- 5 760 980
- US-A1- 2002 135 907

## Beschreibung

Die vorliegende Erfindung betrifft einen Außenspiegel mit Verstelleinrichtung nach dem Oberbegriff des Anspruchs 1.

Fahrzeuge, insbesondere Nutzfahrzeuge, sind heute ganz überwiegend mit einem linken und einem rechten Außenspiegel, d. h. bei linksgesteuerten Fahrzeugen einem Fahrer- und einem Beifahrerspiegel, ausgestattet, um eine möglichst vollständige Übersicht über die rückwärtige Fahrzeugumgebung zu gewährleisten. Bei rechtsgesteuerten Fahrzeugen ist umgekehrt der linke Spiegel der Beifahrerspiegel und der rechte Spiegel ist der Fahrerspiegel. Im Folgenden wird der Übersichtlichkeit halber im wesentlichen nur auf linksgesteuerte Fahrzeuge Bezug genommen, dieselben Überlegungen beziehen sich gleichwohl stets spiegelbildlich auch auf rechtsgesteuerte Fahrzeuge.

Dabei ist es bekannt, ein Gehäuse an einem Fahrzeug festzulegen und eine Spiegelscheibe gegenüber einer Referenz- oder Nullstellung manuell oder motorisch in diesem Gehäuse zu verdrehen, um sie an den individuellen Blickwinkel und die jeweilige Kopfhöhe verschiedener Fahrer anzupassen. Vorteilhaft widersteht dabei das Gehäuse, das über starre oder drehbare Träger am Fahrzeug befestigt wird, großen Windlasten, während die Spiegelscheibe mit geringem Kraftaufwand sehr genau innerhalb des schützenden Gehäuses justierbar ist.

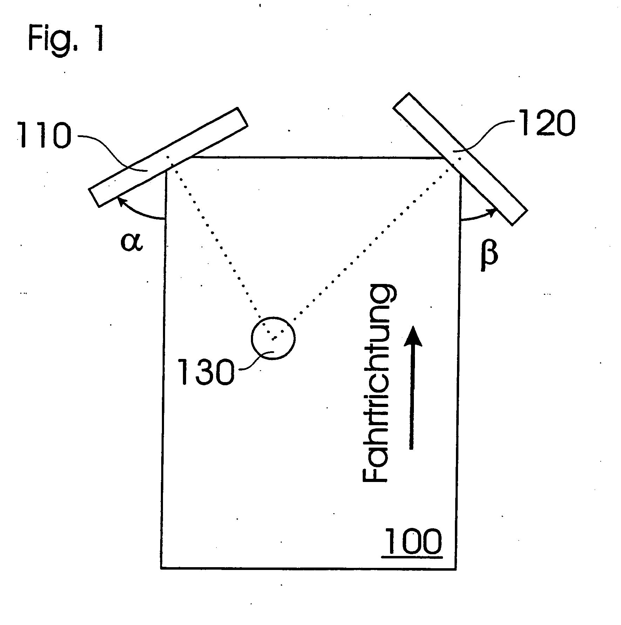

Aufgrund der asymmetrischen Positionierung des Fahrers auf der linken (bzw. rechten) Seite des Fahrzeugs unterscheiden sich diese Referenzstellungen für den linken und rechten Außenspiegel. Beispielsweise ist die Referenzstellung des linken Fahrerspiegels gegenüber der Fahrtrichtung deutlich stärker geneigt als diejenige des rechten Beifahrerspiegels. Fig. 1 zeigt hierzu exemplarisch ein Fahrzeug 100 mit linkem und rechtem Außenspiegel 110 bzw. 120. Der linksseitige Fahrerspiegel 110 ist dabei in seiner Referenzstellung um den Winkel α gegen die Fahrtrichtung geneigt, der rechtsseitige Beifahrerspiegel 120 um den betragsmäßig deutlich kleineren Winkel β < α, um so für eine Referenzfahrer 130 einen idealen Blickwinkel zu gewährleisten.

Aufgrund der unterschiedlichen Referenzstellungen der Spiegelscheibe in dem jeweiligen Gehäuse unterscheiden sich die linkes und rechtes Gehäuse baulich voneinander. Somit kann bisher kein einheitliches Gehäuse zur Verfügung gestellt werden, das durch einfache Drehung gleichermaßen als linkes und rechtes Gehäuse eingesetzt werden könnte. Nachteilig müssen daher stets baulich unterschiedliche Gehäuse für linke und rechte Außenspiegel konstruiert, hergestellt und bevorratet werden.

Hierzu schlägt die US 6,692,131 B1 bzw. die DE 198 40 213 vor, auf einer Trägerplatte einen keilförmigen Zwischenadapter anzuordnen, an dem wiederum die Spiegelscheibe mittels einer Verstelleinrichtung in ihrer Referenzstellung befestigt wird. Der keilförmige Zwischenadapter weist einen Winkel δ = (α - β)/2 auf. Wird die im übrigen einheitliche Trägerplatte spiegelsymmetrisch im Winkel ε zur Fahrtrichtung am Fahrzeug und auf dieser der Zwischenadapter in um 180° um seine Hochachse gedrehten Montagestellungen angeordnet, so ergeben sich, wie Fig. 1 der US 6,692,131 B1 zeigt, die Referenzstellungen ε + δ = α bzw. ε - δ = β . Somit können mittels einheitlicher Trägerplatten und Zwischenadapter durch Vertauschung von deren Montagestellung die unterschiedlichen Referenzstellungen für einen linken und einen rechten Außenspiegel dargestellt werden.

Nachteilig sind dabei separate Zwischenadapter vorzusehen und an der Trägerplatte zu befestigen. Dies erhöht nicht nur die Materialkosten und den Montageaufwand, sondern schafft eine zusätzliche Verbindungsstelle, die beispielsweise anfällig für Vibrationen ist.

Die DE 203 12 173 U1 lehrt zwei verschiedene Spiegelgehäuse für rechts und links sowie zwei Montageelemente, um diese Spiegelgehäuse am Fahrzeug entweder auf der Fahrer- oder Beifahrerseite anzubringen. Dabei werden die zwei Montagestellungen zwischen Gehäuse und Halter realisiert.

Die DE 41 40 268 C2 lehrt eine keilförmige Trägerplatte, die mit dem Spiegelglas vormontiert wird, um eine Baugruppe zu bilden. Damit ist nicht die Verstelleinrichtung (an der dann die Baugruppe montiert wird), sondern die Platte nebst Träger in wenigstens einer ersten und einer zweiten Stellung anbringbar, diese Platte wird dann an der Verstelleinrichtung angebracht.

Die US 5,760,980, die als nächstkommender Stand der Technik angesehen wird, lehrt einen Außenspiegel nach dem Oberbegriff des Anspruchs 1 der vorliegenden Erfindung.

Aufgabe der vorliegenden Erfindung ist es daher, ausgehend von dem nächstkommenden Stand der Technik einen Außenspiegel mit Verstelleinrichtung zu schaffen, bei dem der Montageaufwand und die Vibrationsanfälligkeit geringer sind.

Erfindungsgemäß umfasst ein Außenspiegel ein an dem Fahrzeug befestigbares Gehäuse, wenigstens eine Spiegelscheibe und eine Verstelleinrichtung, an der die Spiegelscheibe in einer Referenzstellung befestigbar und gegenüber dieser verdrehbar ist. Das Gehäuse weist wenigstens einen ersten und einen zweiten Montageplatz für die Verstelleinrichtung und damit für die Spiegelscheibe auf. Die Verstelleinrichtung ist somit in wenigstens einer ersten und einer zweiten Montagestellung direkt mit dem Gehäuse verbindbar, so dass je nach Montagestellung unterschiedliche Referenzstellungen gegenüber dem Gehäuse und damit dem Fahrzeug dargestellt werden. Dabei ist die Spiegelscheibe gegenüber dem Gehäuse verdrehbar.

Durch die direkte Verbindung zwischen Verstelleinrichtung und Gehäuse entfällt vorteilhaft der separate Zwischenadapter nach der US 6,692,131 B1 bzw. der DE 198 40 213. Dies spart nicht nur Materialkosten, sondern verringert auch den Montageaufwand, da nunmehr nicht zunächst der Zwischenadapter und anschließend die Verstelleinrichtung an der Trägerplatte befestigt werden müssen, sondern nur noch die Verstelleinrichtung selber. Der Wegfall eines zusätzlichen Bauteils verringert vorteilhaft nicht nur das Gewicht, sondern vermeidet eine zusätzliche Verbindungs- und damit strukturelle Schwachstelle, die andernfalls Vibrationen verursachen oder verstärken kann.

Gleichwohl können durch die beiden Montagestellungen die oben erläuterten unterschiedlichen Referenzstellungen für linken und rechten Außenspiegel realisiert werden, so dass vorteilhaft der gesamte Verstellbereich der Verstelleinrichtung zur Feinjustage des Blickwinkels zur Verfügung steht. Vorteilhafterweise kann dieser Verstellbereich daher auch relative klein dimensioniert sein, da ja bereits durch die unterschiedlichen Referenzstellungen die grobe Justage des linken bzw. rechten Spiegels auf den Fahrer erfolgt.

Überraschenderweise hat sich gezeigt, dass trotz des höheren Fertigungsaufwandes, der durch die integrale Bauweise ohne Zwischenadapter bedingt ist, und dem Materialmehraufwand, der durch jeweils wenigstens einen ungenutzten Montageplatz bei Gehäuse und Verstelleinrichtung erforderlich ist, ein erfindungsgemäßer Außenspiegel kostengünstiger als die bisher bekannten Lösungen ist.

Die wenigstens zwei Montageplätze sind vorteilhafter Weise unabhängig voneinander zugänglich. Damit kann die Verstelleinrichtung wahlweise an einer der beiden Montageplätze montiert werden, ohne dass Modifizierungen an dem Gehäuse oder der Verstelleinrichtung vorgenommen werden müssen. Auch lässt sich auf diese Weise eine ursprünglich an dem ersten Montageplatz montierte Verstelleinrichtung mit Spiegelscheibe nachträglich wieder lösen und an dem zweiten Montageplatz montieren. Damit lässt sich z. B. eine versehentliche Fehlmontage ohne großen Aufwand beheben.

Bevorzugt schließt die gegenüber der Referenzstellung nicht verdrehte Spiegelscheibe bei an dem Fahrzeug befestigten Gehäuse mit der Fahrtrichtung einen ersten Winkel ein, sofern die Verstelleinrichtung in der ersten Montagestellung mit dem Gehäuse verbunden ist, und schließt mit der Fahrtrichtung einen zweiten Winkel ein, sofern die Verstelleinrichtung in der zweiten Montagestellung mit dem Gehäuse verbunden ist, wobei der erste Winkel größer als der zweite Winkel ist. Ein Außenspiegel mit in der ersten Montagestellung montierter Verstelleinrichtung entspricht dabei beispielsweise einem Fahrerspiegel, ein Außenspiegel mit in der zweiten Montagestellung montierter Verstelleinrichtung beispielsweise einem Beifahrerspiegel.

In an sich bekannter Weise kann das Gehäuse eine Trägerplatte und eine Abdeckung umfassen, wobei die Trägerplatte über einen Trägerarm am Fahrzeug und die Verstelleinrichtung und/oder die Abdeckung an dieser Trägerplatte befestigt wird. Die Abdeckung kann dabei an der Trägerplatte lösbar befestigt oder integral mit ihr ausgebildet sein. Ersteres gestattet eine massive und stabile Befestigung und eine leichte, einfach auszutauschende Außenkontur, letztere eine günstige und kompakte Herstellung.

Die Verdrehung der Spiegelscheibe gegenüber der Referenzstellung kann manuell, insbesondere mittels eines Rastgelenks, oder motorisch, insbesondere mittels eines vom Fahrzeug aus steuerbaren Elektromotors, erfolgen.

Bevorzugt ist Verstelleinrichtung in der ersten und/oder der zweiten Montagestellung lösbar mit dem Gehäuse verbunden, insbesondere mit diesem verschraubt. Gleichermaßen können beide Teile in wenigstens einer Montagestellung auch unlösbar, beispielsweise mittels Verkleben, miteinander verbunden sein. Eine vorteilhafte Verbindung umfasst eine oder mehrere Schnappverbindungen, die bei Einführen der Verstelleinrichtung in das Gehäuse einschnappen. Besonders bevorzugt sind die Verbindungen in beiden Montagestellungen identisch ausgestaltet, so dass die Verstelleinrichtung oder das Gehäuse nur eine einzige Verbindungsmöglichkeit aufweisen müssen.

Eine vorteilhafte Verbindungsmöglichkeit zwischen Verstelleinrichtung und Gehäuse umfasst einen Formschluss. Hierzu kann beispielsweise das Gehäuse wenigstens eine Aussparung zum formschlüssigen Aufnehmen der Verstelleinrichtung in der ersten oder der zweiten Montagestellung aufweist. Umgekehrt kann auch die Verstelleinrichtung mit einer Aussparung versehen sein, die in der ersten oder zweiten Montagestellung einen Teil des Gehäuses aufnimmt.

Weitere Aufgaben, Vorteile und Merkmale der vorliegenden Erfindung ergeben sich aus den Unteransprüchen und den Ausführungsbeispielen. Hierzu zeigt:
Fig. 1 die Referenzstellung eines Fahrer- und Beifahrerspiegels bei einem linksgesteuerten Fahrzeug;
Fig. 2 einen Außenspiegel nach einer ersten Ausführung der vorliegenden Erfindung mit einer in einer ersten Montagestellung angeordneten Verstelleinrichtung in einer Querschnittsansicht von oben; und
Fig. 3 den Außenspiegel nach Fig. 2 mit der in der zweiten Montagestellung angeordneten Verstelleinrichtung in einer Querschnittsansicht von unten.

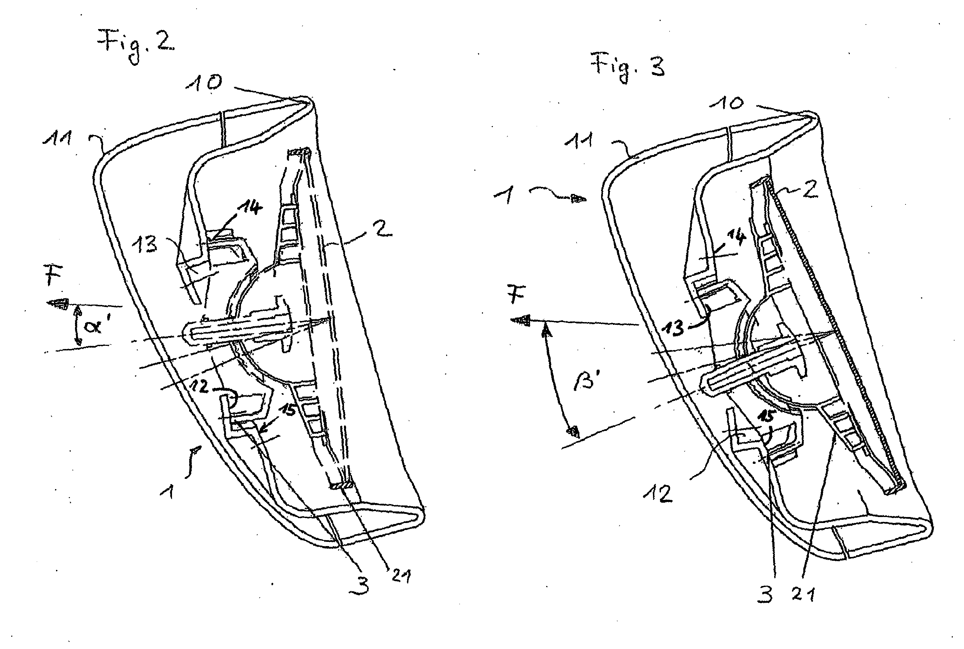

Figuren 2 und 3 zeigen einen Außenspiegel nach einer ersten Ausführung der vorliegenden Erfindung. Dieser umfasst eine Trägerplatte 10 und eine Abdeckung 11, die zusammen ein Gehäuse 1 bilden. In der hier dargestellten Ausführung sind Trägerplatte 10 und Abdeckung 11 miteinander verschraubt (nicht dargestellt).

Eine Spiegelscheibe 2 ist auf eine Spiegelträgerplatte 21 geklebt, die ihrerseits drehbar an einer Verstelleinrichtung 3 befestigt ist. Die Spiegelscheibe 2 ist jeweils in ihrer Referenzstellung gezeigt, gegenüber der sie mittels der Verstelleinrichtung 3 verdrehbar ist. Hierzu umfasst die Verstelleinrichtung 3 ein Kugelrastgelenk, so dass die Spiegelscheibe 2 mit der Spiegelträgerplatte 21 durch Druck auf eine Kante bzw. Ecke der Spiegelscheibe 2 verdrehbar ist und in regulären Intervallen einrastet. In einer nicht dargestellten alternativen Ausführung umfasst die Verstelleinrichtung 3 einen Elektromotor, der vom Fahrzeug aus ansteuerbar ist und eine Verdrehung der Spiegelscheibe 2 gegenüber dem Gehäuse 1 realisiert.

Wie aus den Figuren 2 und 3 zu ersehen ist, kann die Verstelleinrichtung 3 mit der Spiegelscheibe 2 an einem ersten - Fig. 2 - und einem zweiten - Fig. 3 - Montageplatz in dem Gehäuse montiert werden. Hierzu weist das Gehäuse 1 eine erste Aussparung 12 und eine spiegelbildlich gegenüber angeordnete zweite Aussparung 13 auf. Bezüglich der zweiten Aussparung 13 seitlich nach außen und in Richtung der Spiegelscheibe 2 versetzt ist eine erste Verbindungsstelle 14 vorgesehen. Bezüglich der ersten Aussparung 12 seitlich nach außen und in Richtung der Spiegelscheibe 2 versetzt ist eine zweite Verbindungsstelle 15 vorgesehen. Der erste Montageplatz wird damit durch die erste Aussparung 12 und die erste Verbindungsstelle 14 gebildet. Der zweite Montageplatz wird durch die zweite Aussparung 13 und die zweite Verbindungsstelle 15 gebildet.

In Fig. 2, einer Schnittdarstellung von oben betrachtet, ist die Verstelleinrichtung 3 an dem ersten Montageplatz 12, 14 und damit in der ersten Montagestellung montiert. Die Verstelleinrichtung 3 ist in der ersten Aussparung 12 in der Trägerplatte 10 aufgenommen und im übrigen mittels Schrauben (in Fign. 2, 3 durch Mittellinien angedeutet) an der ersten Verbindungsstelle 14 befestigt. Die entsprechenden Anlageflächen zwischen Verstelleinrichtung 3 und Trägerplatte 10 und die erste Aussparung 12 sind dabei so ausgebildet, dass die Spiegelscheibe 2 mit der Fahrtrichtung F einen ersten Winkel α einschließt, sofern das Gehäuse am Fahrzeug (nicht dargestellt) befestigt und die Spiegelscheibe 2 gegenüber der Verstelleinrichtung 3 in ihrer unverdrehten Referenzstellung angeordnet ist. In Fig. 2 ist der Übersichtlichkeit halber der Komplementärwinkel α' = 90° - α der Spiegelnormalen anstelle des ersten Winkels α dargestellt.

Verdreht man das Spiegelgehäuse um 180° um die Fahrtrichtungsachse und befestigt es wiederum am Fahrzeug, so ergibt sich die in Fig. 3 dargestellte Relation zur Fahrtrichtung, wobei nunmehr die Ansicht im Querschnitt von unten gezeigt ist. In Fig. 3 ist eine zweite Montagestellung gezeigt, in der die Verstelleinrichtung 3 mit Spiegelscheibe 2 an dem zweiten Montageplatz 13, 15 befestigt ist. Damit ist die Verstelleinrichtung 3 nunmehr in der zweiten Aussparung 13 in der Trägerplatte 10 aufgenommen und im übrigen wiederum mittels Schrauben (durch Mittellinien angedeutet) an zweiten Verbindungsstelle 15 befestigt. Die dabei kontaktierenden Anlageflächen zwischen Verstelleinrichtung 3 und Trägerplatte 10 und die zweite Aussparung 13 sind so ausgebildet, dass die Spiegelscheibe 2 mit der Fahrtrichtung F einen zweiten Winkel β einschließt, sofern das Gehäuse am Fahrzeug (nicht dargestellt) befestigt und die Spiegelscheibe 2 gegenüber der Verstelleinrichtung 3 in ihrer unverdrehten Referenzstellung angeordnet ist. In Fig. 3 ist der Übersichtlichkeit halber wiederum der Komplementärwinkel β ' = 90° - β der Spiegelnormalen anstelle des zweiten Winkels β dargestellt.

In der Zusammenschau der Figuren wird deutlich, dass bei Anordnung der Verstelleinrichtung 3 im Gehäuse 1 in der ersten, in Fig. 2 gezeigten Montagestellung, wobei die Verstelleinrichtung in der ersten Aussparung 12 formschlüssig aufgenommen und mit der Trägerplatte 11 verschraubt ist, ein fahrerseitiger Außenspiegel mit einem großen ersten Winkel α zwischen Spiegelscheibe 2 und Fahrtrichtung zur Verfügung steht. Durch Montage der Verstelleinrichtung 3 in der in Fig. 3 gezeigten zweiten Montagestellung, wobei die Verstelleinrichtung in der zweiten Aussparung 13 formschlüssig aufgenommen und mit der Trägerplatte 11 verschraubt ist, wird ein Beifahrerspiegel mit einem kleinem zweiten Winkel β zur Verfügung gestellt. Somit können durch ein einheitliches Gehäuse 1 und eine einheitliche Verstelleinrichtung 3 je nach Montage der Verstelleinrichtung 3 in der ersten oder zweiten Montagestellung bzw. an dem ersten und zweiten Montageplatz 12, 14 bzw. 13, 15 Fahrer- und Beifahrerspiegel zur Verfügung gestellt werden.

Die beiden erfindungsgemäßen Montagestellungen können in verschiedenen Ausführungen realisiert sein. Neben den zwei Aussparungen 12, 13 der hier dargestellten Ausführung können auch lediglich entsprechend geneigte Anlageflächen im Gehäuse 1 und/oder der Verstelleinrichtung 3 ausgebildet sein. Gleichermaßen kann, analog zur dargestellten Ausführung, auch die Verstelleinrichtung 3 entsprechende Aussparungen aufweisen, die je nach Montagestellung Teile des Gehäuses aufnehmen.

Die hier dargestellte Ausführung mit einer ersten und zweiten Aussparung 12, 13 im Gehäuse 1 ermöglicht einerseits eine sehr kompakte und stabile Anordnung der Verstelleinrichtung 3. Zum anderen gestattet sie, die Verstelleinrichtung 3 mit nur einer Verbindungsmöglichkeit, beispielsweise einer flachen Anlagefläche und Bohrungen für die Verschraubung, auszubilden.

In einer nicht dargestellten weiteren Ausführung der vorliegenden Erfindung ist die Verstelleinrichtung 3 auch noch in einer dritten oder weiteren Montagestellungen in dem Gehäuse anordnenbar, so dass beispielsweise verschiedene Referenzstellungen der Spiegelscheibe gegenüber dem Gehäuse sowohl für den Fahrer- als auch den Beifahrerspiegel realisiert werden könne. Dies ermöglicht es, das Gehäuse 1 in verschiedenen Winkel gegenüber der Fahrtrichtung an dem Fahrzeug zu befestigen und durch die entsprechende Montagestellung jeweils dieselbe Referenzstellung der Spiegelscheibe zu gewährleisten. Somit können beispielsweise verschiedene Trägerarme und/oder Befestigungspositionen am Fahrzeug mit denselben Außenspiegeln bestückt werden.

Vorstehend wurden verschiedene Montagestellungen erörtert, die sich durch den Winkel der Spiegelscheibe zur Fahrtrichtung in einer Querebene des Außenspiegels unterscheiden, i.e. in dieser verdreht sind. Dies ermöglicht die Verwendung als Fahrer- und Beifahrerspiegel. Zusätzlich oder alternativ können die Montagestellungen jedoch auch unterschiedliche Winkel der Spiegelscheibe zur Fahrtrichtung in einer Hochebene des Außenspiegels darstellen.

In einer entsprechenden weiteren Ausführungsform stellen Fign. 2 und 3 einen erfindungsgemäßen Spiegel im Längsschnitt, d. h. der Seitenansicht von rechts, dar. lst die Verstelleinrichtung, wie in Fig. 2 gezeigt, in der ersten Montagestellung angeordnet, kann der Außenspiegel in etwa in Augehöhe des Fahrer am Fahrzeug befestig werden. Ist hingegen die Verstelleinrichtung, wie in Fig. 3 gezeigt, in der zweiten Montagestellung angeordnet, kann der Außenspiegel deutlich höher am Fahrzeug befestig werden. Damit ist es vorteilhaft möglich, einen Fahrer- bzw. Beifahrerspiegel höher oder tiefer am Fahrzeug zu befestigen.

Gleichermaßen gestattet es die vorstehend beschriebene erste Ausführungsform, denselben Außenspiegel näher oder weiter weg vom Fahrzeug anzuordnen, um beispielsweise bei Anhängern den Blickwinkel entsprechend zu ändern.

Oben genannte Anordnungen (näher/ferner zum Fahrzeug; höher/tiefer und/oder links/rechts) können auch durch einen einheitlichen erfindungsgemäßen Außenspiegel realisiert werden, wobei dieser für jede Anordnung eine entsprechende Montagestellung der Verstelleinrichtung im Gehäuse zur Verfügung stellt.

### Bezugszeichenliste:

- 1: Spiegelgehäuse
- 2: Spiegelscheibe
- 3: Verstelleinrichtung
- 10: Trägerplatte
- 11: Abdeckung
- 12: erste Aussparung
- 13: zweite Aussparung
- 14: erste Verbindungsstelle
- 15: zweite Verbindungsstelle
- 12, 14: erster Montageplatz
- 13, 15: zweiter Montageplatz
- 21: Spiegelträgerplatte

## Patentansprüche

1. Außenspiegel für ein Fahrzeug, insbesondere für ein Nutzfahrzeug, der umfasst:
ein an dem Fahrzeug befestigbares Gehäuse (1);
wenigstens eine Spiegelscheibe (2); und
eine Verstelleinrichtung (3), an der die Spiegelscheibe in einer Referenzstellung befestigbar und gegenüber dieser verdrehbar ist,
wobei,
das Gehäuse (1) wenigstens einen ersten (12, 14) und einen zweiten (13, 15) Montageplatz für eine erste und zweite Montagestellung der Verstelleinrichtung (3) aufweist, so dass die Verstelleinrichtung (3) wenigstens in einer ersten oder in einer zweiten Montagestellung direkt mit dem Gehäuse (1) verbunden ist, **dadurch gekennzeichnet, dass** die Spiegelscheibe gegenüber dem Gehäuse verdrehbar ist.

2. Außenspiegel nach Anspruch 1, **dadurch gekennzeichnet, dass** stets mindestens einer der beiden Montageplätze (12, 14 und 13, 15) für die Montage der Verstelleinrichtung (3) zugänglich ist.

3. Außenspiegel nach Anspruch 1 oder 2, **dadurch gekennzeichnet, dass** die gegenüber der Referenzstellung nicht verdrehte Spiegelscheibe (2) bei an dem Fahrzeug befestigten Gehäuse (1) mit der Fahrtrichtung (F) einen ersten Winkel (α) einschließt, sofern die Verstelleinrichtung (3) in der ersten Montagestellung mit dem Gehäuse (1) verbunden ist; und
mit der Fahrtrichtung (F) einen zweiten Winkel (β) einschließt, sofern die Verstelleinrichtung (3) in der zweiten Montagestellung mit dem Gehäuse (1) verbunden ist,
wobei der erste Winkel (α) größer als der zweite Winkel (β) ist.

4. Außenspiegel nach einem der vorigen Ansprüche, **dadurch gekennzeichnet, dass**
das Gehäuse (1) eine Trägerplatte (10) und eine Abdeckung (11) umfasst;
die Trägerplatte (10) über einen Trägerarm am Fahrzeug befestigbar ist; und
die Verstelleinrichtung (3) und/oder die Abdeckung (11) an der Trägerplatte (10) befestigt ist.

5. Außenspiegel nach Anspruch 4, **dadurch gekennzeichnet, dass** die Abdeckung (11) an der Trägerplatte (10) lösbar befestigt ist.

6. Außenspiegel nach Anspruch 4, **dadurch gekennzeichnet, dass** die Abdeckung (11) integral mit der Trägerplatte (10) ausgebildet ist.

7. Außenspiegel nach einem der vorigen Ansprüche, **dadurch gekennzeichnet, dass** die Spiegelscheibe (2) an einer Spiegelträgerplatte (21) befestigt ist, die mit der Verstelleinrichtung (3) verbunden ist.

8. Außenspiegel nach einem der vorigen Ansprüche, **dadurch gekennzeichnet, dass** die Verstelleinrichtung (3) eine manuelle Verdrehung der Spiegelscheibe (2) gegenüber der Referenzstellung, insbesondere mittels eines Rastgelenks, ermöglicht.

9. Außenspiegel nach einem der vorigen Ansprüche, **dadurch gekennzeichnet, dass** die Verstelleinrichtung (3) eine motorische Verdrehung der Spiegelscheibe (2) gegenüber der Referenzstellung, insbesondere mittels eines vom Fahrzeug aus steuerbaren Elektromotors, ermöglicht.

10. Außenspiegel nach einem der vorigen Ansprüche, **dadurch gekennzeichnet, dass** die Verstelleinrichtung (3) in der ersten und/oder der zweiten Montagestellung lösbar mit dem Gehäuse (1) verbunden ist.

11. Außenspiegel nach Anspruch 10, **dadurch gekennzeichnet, dass** die Verstelleinrichtung (3) in der ersten und/oder der zweiten Montagestellung mit dem Gehäuse verschraubt ist.

12. Außenspiegel nach einem der Ansprüche 1 bis 9, **dadurch gekennzeichnet, dass** die Verstelleinrichtung (3) in der ersten und/oder der zweiten Montagestellung unlösbar mit dem Gehäuse (1) verbunden ist.

13. Außenspiegel nach einem der vorigen Ansprüche, **dadurch gekennzeichnet, dass** die Verstelleinrichtung (3) in der ersten und/oder der zweiten Montagestellung formschlüssig mit dem Gehäuse (1) verbunden ist.

14. Außenspiegel nach einem der vorigen Ansprüche, **dadurch gekennzeichnet, dass** das Gehäuse (1) wenigstens eine Aussparung (12, 13), insbesondere wenigstens zwei Aussparungen, zum formschlüssigen Aufnehmen der Verstelleinrichtung (3) in der ersten oder der zweiten Montagestellung aufweist.

15. Gehäuse für einen Außenspiegel nach einem der vorigen Ansprüche, **dadurch gekennzeichnet, dass** wenigstens zwei Montageplätze für eine Verstelleinrichtung (3) so vorgesehen sind, dass stets mindestens einer der beiden Montageplätze (12, 14 und 13, 15) für die Montage der Verstelleinrichtung (3) zugänglich ist.

16. Verstelleinrichtung für einen Außenspiegel nach einem der vorigen Ansprüche1 bis 14, **dadurch gekennzeichnet, dass** sie so ausgebildet ist, dass sie an wenigstens einer ersten und einer zweiten Montagestellung direkt mit einem Gehäuse (1) verbindbar ist.

## Claims

1. An external mirror for a vehicle, in particular for a utility vehicle, comprising:
a housing (1) adapted to be mounted on the vehicle (1);
at least one mirror pane (2); and
an adjustment device (3) on which the mirror pane may be fastened in a reference position and rotated relative thereto,
said housing (1) including at least a first (12, 14) and a second (13, 15) mounting location for first and second mounting positions of the adjustment device (3) such that the adjustment device (3) is connected directly to the housing (1) in at least a first or a second mounting position,
**characterized in that** the mirror pane may be rotated relative to the housing.

2. The external mirror according to claim 1, **characterized in that** at any time at least one of the two mounting locations (12, 14 and 13, 15) is accessible for mounting the adjustment device (3).

3. The external mirror according to claim 1 or 2, **characterized in that** the mirror pane (2), when in the non-rotated condition relative to the reference position while the housing (1) is affixed to the vehicle, forms a first angle (α) with the direction of travel (F) if the adjusting device (3) is connected to the housing (1) in the first mounting position; and
forms a second angle (β) with the direction of travel (F) if the adjusting device (3) is connected to the housing (1) in the second mounting position,
said first angle (α) being greater than said second angle (β).

4. The external mirror according to any one of the preceding claims, **characterized in that**
the housing (1) includes a carrier plate (10) and a cover (11);
the carrier plate (10) is adapted to be fastened to the vehicle by means of a carrier arm; and
the adjustment device (3) and/or the cover (11) is fastened to the carrier plate (10).

5. The external mirror according to claim 4, **characterized in that** the cover (11) is releasably fastened to the carrier plate (10).

6. The external mirror according to claim 4, **characterized in that** the cover (11) is formed integrally with the carrier plate (10).

7. The external mirror according to any one of the preceding claims, **characterized in that** the mirror pane (2) is fastened to a mirror carrier plate (21) which is connected to the adjustment device (3).

8. The external mirror according to any one of the preceding claims, **characterized in that** the adjustment device (3) allows a manual rotation of the mirror pane (2) relative to the reference position, in particular by means of a locking hinge.

9. The external mirror according to any one of the preceding claims, **characterized in that** the adjustment device (3) allows a powered rotation of the mirror pane (2) relative to the reference position, in particular by means of an electric motor which is controllable from the vehicle.

10. The external mirror according to any one of the preceding claims, **characterized in that** the adjustment device (3) is releasably connected to the housing (1) in the first and/or second mounting position.

11. The external mirror according to claim 10, **characterized in that** the adjusting device (3) is affixed to the housing (1) by screws in the first and/or second mounting position.

12. The external mirror according to any one of claims 1 to 9, **characterized in that** the adjusting device (3) is permanently fastened to the housing (1) in the first and/or second mounting position.

13. The external mirror according to any one of the preceding claims, **characterized in that** the adjustment device (3) is connected to the housing (1) in a positive fit in the first or the second mounting position.

14. The external mirror according to any one of the preceding claims, **characterized in that** the housing (1) has at least one recess (12, 13), in particular at least two recesses, for receiving the adjustment device (3) in a positive fit in the first or second mounting position.

15. A housing for an external mirror according to any one of the preceding claims, **characterized in that** at least two mounting locations for an adjustment device (3) are provided such that at any time at least one of the two mounting locations (12, 14 and 13, 15) is accessible for mounting the adjustment device (3).

16. An adjustment device for an external mirror according to any one of the preceding claims 1 to 14, **characterized by** being configured such that it may be connected directly to a housing (1) in at least a first and a second mounting position.

## Revendications

1. Rétroviseur extérieur pour un véhicule, en particulier pour un véhicule utilitaire, comprenant :
un boîtier (1), susceptible d'être fixé sur le véhicule ;
au moins un verre de miroir (2) ; et
un dispositif de réglage (3) sur lequel le verre de miroir peut être fixé en une position de référence, et peut être tourné par rapport à celle-ci ;
où le boîtier (1) présente au moins un premier (12, 14) et un deuxième (13, 15) emplacement de montage pour une première et und deuxième position de montage du dispositif de réglage (3), de manière que le dispositif de réglage (3) soit relié, en au moins une première ou une deuxième position de montage, directement au boîtier (1),
**caractérisé en ce que**
le verre de miroir peut être tourné par rapport au boîtier.

2. Rétroviseur extérieur selon la revendication 1, **caractérisé en que**, toujours au moins l'un des deux emplacements de montage (12, 14 et 13, 15) est accessible pour le montage du dispositif de réglage (3).

3. Rétroviseur extérieur selon la revendication 1 ou 2, **caractérisé en ce que**
la vitre de miroir (2) n'ayant pas été tournée par rapport à la position de référence, lorsque le boîtier (1) est fixé sur le véhicule, fait, avec la direction de roulage (F), un premier angle (α), dans la mesure où le dispositif de réglage (3) est relié au boîtier (1) à la première position de montage ; et
fait, avec ladite direction de roulage (F), un deuxième angle (β), dans la mesure
où le dispositif de réglage (3) est relié au boîtier (1) à la deuxième position de montage ;
où le premier angle α est supérieur au deuxième angle β.

4. Rétroviseur extérieur selon une des revendications précédentes, **caractérisé en ce que**
le boîtier (1) comprend une plaque support (10) et un recouvrement (11) ;
la plaque support (10) étant susceptible d'être fixée au véhicule, par l'intermédiaire d'un bras support ; et
le dispositif de réglage (3) et/ou le recouvrement (11) est/sont fixé(s) à la plaque support (10).

5. Rétroviseur extérieur selon la revendication 4, **caractérisé en ce que** le recouvrement (11) est fixé de façon désolidarisable sur la plaque support (10).

6. Rétroviseur extérieur selon la revendication 4, **caractérisé en ce que** le recouvrement (11) est réalisé d'une seule pièce avec la plaque support (10).

7. Rétroviseur extérieur selon l'une des revendications précédentes, **caractérisé en ce que** la vitre de miroir (3) est fixée sur une plaque support de miroir (21) reliée au dispositif de réglage (3).

8. Rétroviseur extérieur selon l'une des revendications précédentes, **caractérisé en ce que** le dispositif de réglage (3) permet une rotation manuelle de la vitre de miroir (3) par rapport à la position de référence, en particulier au moyen d'une articulation à encliquetage.

9. Rétroviseur extérieur selon l'une quelconque des revendications précédentes, **caractérisé en ce que** le dispositif de réglage (3) permet une rotation motorisée de la vitre de miroir (2) par rapport à la position de référence, en particulier au moyen d'un moteur électrique pouvant être commandé depuis le véhicule.

10. Rétroviseur extérieur selon l'une des revendications précédentes, **caractérisé en ce que** le dispositif de réglage (3), à la première et/ou à la deuxième position de montage, est relié de façon désolidarisable au boîtier (1).

11. Rétroviseur-extérieur selon la revendication 10, **caractérisé en ce que** le dispositif de réglage (3), à la première et/ou à la deuxième position de montage, est vissé au boîtier.

12. Rétroviseur extérieur selon l'une des revendications 1 à 9, **caractérisé en ce que** le dispositif de réglage (3), à la première et/ou à la deuxième position de montage, est relié de façon indésolidarisable au boîtier (1).

13. Rétroviseur extérieur selon l'une des revendications précédentes, **caractérisé en ce que** le dispositif de réglage (3), à la première et/ou à la deuxième position de montage, est relié par une liaison à ajustement de forme au boîtier (1).

14. Rétroviseur extérieur selon l'une des revendications précédentes, **caractérisé en ce que** le boîtier (1) présente au moins un évidement (12, 13), en particulier au moins deux évidements, pour recevoir, par une liaison à ajustement de forme, le dispositif de réglage (3) à la première et/ou à la deuxième position de montage.

15. Boîtier pour un rétroviseur extérieur selon l'une des revendications précédentes, **caractérisé en ce qu'**au moins deux emplacements de montage sont prévus pour un dispositif de réglage (3), de manière que toujours au moins l'un des deux emplacements de montage (12, 14 et 13, 15) soit accessible pour le montage du dispositif de réglage (3).

16. Dispositif de réglage pour un rétroviseur selon l'une des revendications 1 à 14 précédentes, **caractérisé en ce qu'**il est réalisé de manière qu'il puisse être relié, en au moins une première et une deuxième position de montage, directement au boîtier (1).
